(19) Europäisches Patentamt / European Patent Office / Office européen des brevets

(11) **EP 3 286 871 B1**

(12) **EUROPEAN PATENT SPECIFICATION**

(45) Date of publication and mention
of the grant of the patent:
**22.07.2020 Bulletin 2020/30**

(21) Application number: **16719189.9**

(22) Date of filing: **22.04.2016**

(51) Int Cl.:
**H04L 9/08** $^{(2006.01)}$       **H04L 9/12** $^{(2006.01)}$

(86) International application number:
**PCT/US2016/028858**

(87) International publication number:
**WO 2016/172492 (27.10.2016 Gazette 2016/43)**

(54) **SYSTEMS, METHODS, AND DEVICES FOR DEVICE CREDENTIAL PROTECTION**

SYSTEME, VERFAHREN UND VORRICHTUNGEN ZUM SCHUTZ VON
VORRICHTUNGSZUGANGSDATEN

SYSTÈMES, PROCÉDÉS ET DISPOSITIFS POUR LA PROTECTION DE JUSTIFICATIFS
D'IDENTITÉ DE DISPOSITIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2015 US 201562152364 P**

(43) Date of publication of application:
**28.02.2018 Bulletin 2018/09**

(73) Proprietor: **PCMS Holdings, Inc.
Wilmington, DE 19809 (US)**

(72) Inventor: **GEHRMANN, Christian M.
227 38 Lund (SE)**

(74) Representative: **Heinze, Ekkehard
Meissner Bolte Patentanwälte
Rechtsanwälte Partnerschaft mbB
Widenmayerstraße 47
80538 München (DE)**

(56) References cited:
**US-A1- 2009 191 857       US-A1- 2014 093 082
US-A1- 2015 012 744**

- **KEOH O GARCIA-MORCHON S KUMAR E DIJK
  PHILIPS RESEARCH S: "DTLS-based Multicast
  Security for Low-Power and Lossy Networks
  (LLNs); draft-keoh-tls-multicast-security-00.txt",
  DTLS-BASED MULTICAST SECURITY FOR
  LOW-POWER AND LOSSY NETWORKS (LLNS);
  DRAFT-KEOH-TLS-MULTICAST-SECURITY-00.T
  XT, INTERNET ENGINEERING TASK FORCE,
  IETF; STANDARDWORKINGDRAFT, INTERNET
  SOCIETY (ISOC) 4, RUE DES FALAISES CH- 1205
  GENEVA, SWITZERLAND, 15 October 2012
  (2012-10-15), pages 1-19, XP015084879,**
- **KEOH UNIVERSITY OF GLASGOW S KUMAR O
  GARCIA-MORCHON PHILIPS RESEARCH S:
  "Securing the IP-based Internet of Things with
  DTLS; draft-keoh-lwig-dtls-iot-02.txt",
  SECURING THE IP-BASED INTERNET OF
  THINGS WITH DTLS;
  DRAFT-KEOH-LWIG-DTLS-IOT-02.TXT,
  INTERNET ENGINEERING TASK FORCE, IETF;
  STANDARDWORKINGDRAFT, INTERNET
  SOCIETY (ISOC) 4, RUE DES FALAISES CH- 1205
  GENEVA, SWITZERLAND, 27 August 2013
  (2013-08-27), pages 1-20, XP015093435,**

## Description

## CROSS-REFERENCE TO RELATED APPLICATIONS

This application claims the benefit of the United States Provisional Application No. 62/152,364 filed April 24, 2015.

## BACKGROUND

Machine to Machine (M2M) and/or Internet of Things (IoT) may be an Internet paradigm that may be used to remotely configure and control a very large amount of electronic equipment (*e.g.,* M2M and/or IoT units or devices) and may open up additional possibilities with respect to services such as automotive, industry control, traffic management and building automation, may reduce cost for maintenance, surveillance, production, transport and communications, and/or the like. Such M2M and/or IoT devices or units may be susceptible to attacks (*e.g.,* remotely and/or by an actual attacker in person such as via theft). Typically, to help protect a computer or typical mobile device from being compromised (*e.g.,* from false use), a user may be prompted with questions and/or to provide a hardware security token. Unfortunately, such techniques that may be used to help protect a computer or mobile device may not be suitable for M2M and/or IoT devices or units as such M2M and/or IoT devices or units may not be operated directly by a user to answer the questions and/or to provide a physical presence of a hardware security token. US 2015/012744 A1 discloses a secure M2M communication system.

## SUMMARY

Systems, methods, and/or techniques may be disclosed for helping prevent credentials from being compromised during an attack or theft of Internet of Things (IoT) devices. Secure communications between IoT devices and a device management server may be managed (e.g., in case of an attack or theft). A group master key KG may be received at a local key generation unit or a particular IoT attached to a local area network. A first session group key may be generated using the received group master key KG and a sequence number (n) at the local key generation unit or the particular IoT. The first session group key may be sent from the local key generation unit to each of a plurality of IoT devices via the local area network.

An Internet of Things (IoT) device may include a memory and a processor. The processor may be configured to receive a pre-shared key unique to the IoT device and receive a first session group key from a device associated with a same local network as the IoT device. The first session group key may be valid for a time interval. An encrypted message may be sent to a device management server (DMS) to establish a secure channel with the DMS. The encrypted message may include an identifier comprising an indication of a first sequence number associated with the first session group key. The encrypted message may be encrypted as a function of the first session group key and the pre-shared key.

An Internet of Things (IoT) device may include a memory and a processor. The processor may be configured to receive a pre-shared key that is unique to the IoT device and receive a first session group key from a device in a same local area network as the IoT device. The first session group key may be valid for a time interval. The processor may be configured to attempt to establish a secure communication session with a device management server (DMS). Attempting to establish the secure communication session may include sending a message to the DMS using the pre-shared key and the first session group key. If the message is sent to the DMS during the time interval, the processor may receive a communication from the DMS that indicates that a secure communication session has been established with the DMS. If the first message is sent to the DMS outside the time interval, the processor may fail to establish the secure communication session.

A device may include a memory and a processor. The processor may be configured to receive a group master key and generate a first session group key based on the group master key and a sequence number. The first session group key may be valid for a first time period. The processor may be configured to send the first session group key to an Internet of Things (IoT) device via a local network. A local key may be generated as a function of the session group key and a secret associated with the IoT device. The local key may be used to establish a secure communication between the IoT device and a device management server. The sequence number may be updated. The processor may be configured to generate a second session group key based on the group master key and the updated sequence number. The second session group key may be valid for a second time period. The second session group key may be sent to the IoT device via the local network.

Secure communications may be managed among a plurality of Internet of Things (IoT) devices and a device management server by determining, at a first IoT device of the plurality of IoT devices, a first session group key calculation share as a function of a secret associated with the first IoT device and an index. The first IoT device may receive respective second session group key calculation shares from a subset of the plurality of IoT devices. The first IoT device may determine a session group key as a function of the first session group key calculation share and the second group key calculation shares. A symmetric key may be generated as a function of the session group key and the secret associated with the first IoT device. The symmetric key may be used to establish a secure communication between the first IoT device and the device management server.

The summary is provided to introduce a selection of concepts in a simplified form that are further described below in the detailed description. This summary is not intended to identify key features or essential features of the claimed subject matter, nor is it intended to be used to limit the scope of the claimed subject matter. The claimed subject matter is not limited to the examples herein that may solve one or more disadvantages noted in any part of this disclosure. The invention is defined by the independent claims.

## BRIEF DESCRIPTION OF THE DRAWINGS

A more detailed understanding of the embodiments disclosed herein may be had from the following description, given by way of example in conjunction with the accompanying drawings.

FIG. 1 illustrates an example IoT network.

FIG. 2 illustrates an example secure presence check for one or more of the examples herein.

FIG. 3 illustrates an example of providing a shared secret or key in a group for one or more examples described herein.

FIGS. 4A-4B illustrate examples of distribution of a session group key using a distribution device, such as a group key unit, that may be used to protect device credentials for a device such as an IoT device or unit that may be compromised as described in examples herein.

FIG. 5 illustrates an example of distribution of a session group key using a device or unit such as an IoT device or unit that may be used to help protect device credentials for a device such as an IoT device or unit that may be compromised as described in examples herein.

FIG. 6 illustrates an example for calculating a group key for joint derivation of session group keys that may be used to help protect device credentials for a device such as an IoT device or unit that may be compromised as described in examples herein.

FIG. 7 illustrates an example entity relationship diagram for providing a group key that may be used that may be used to help protect device credentials for a device such as an IoT device or unit that may be compromised as described in examples herein.

FIG. 8 illustrates an example flow diagram of a method for securing communications between IoT devices or units and a back end server such as a DMS (*e.g.,* in case an IoT device may be compromised).

FIG. 9 illustrates an example flow diagram of a method performed by a key generation device or unit for using a group key that may be used to help protect device credentials for a device such as an IoT device or unit that may be compromised as described in examples herein.

FIG. 10 illustrates an example flow diagram of a method performed by an IoT device or unit for using a group key that may be used to help protect device credentials for a device such as an IoT device or unit that may be compromised as described in examples herein.

FIG. 11 illustrates an example flow diagram of a method performed by a DMS for using a group key that may be used to help protect device credentials for a device such as an IoT device or unit that may be compromised as described in examples herein.

FIG. 12 illustrates an example of an industry system in which one or more examples described herein may be used and/or implemented.

FIG. 13A depicts a diagram of an example communications system in which one or more disclosed examples may be implemented and/or may be used with one or more of the examples described herein.

FIG. 13B depicts a system diagram of an example device such as a wireless transmit/receive unit (WTRU), server, database, and/or the like that may be used within the communications system illustrated in FIG. 13A.

FIG. 13C depicts a system diagram of an example radio access network and an example core network that may be used within the communications system illustrated in FIG. 13A.

FIG. 13D depicts a system diagram of another example radio access network and an example core network that may be used within the communications system illustrated in FIG. 13A.

FIG. 13E depicts a system diagram of another example radio access network and an example core network that may be used within the communications system illustrated in FIG. 13A.

## DETAILED DESCRIPTION

A detailed description of illustrative embodiments may now be described with reference to the various Figures. Although this description provides a detailed example of possible implementations, it should be noted that the details are intended to be exemplary and in no way limit the scope of the examples described herein.

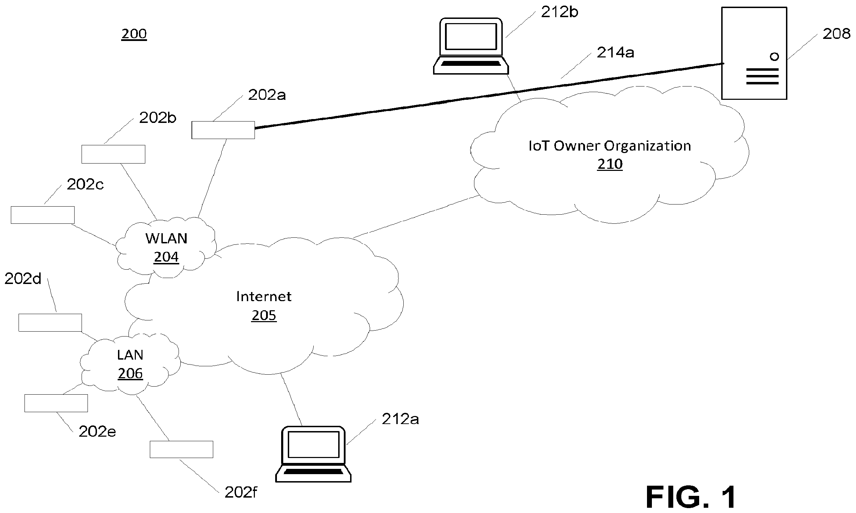

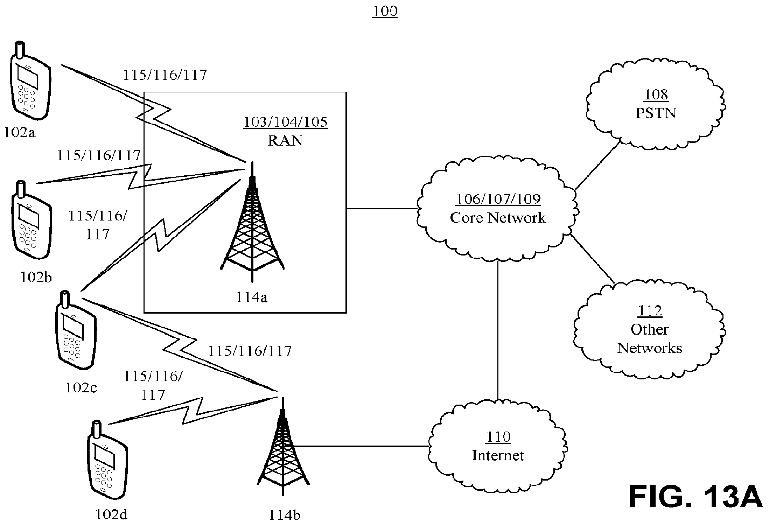

As described herein, Machine to Machine (M2M) or Internet-of-Things (IoT) systems may be starting to become more widely deployed. FIG. 1 illustrates an example of a M2M and/or IoT network 200. As shown in FIG. 1, such a system or network may include distributed units such as IoT units 202a-f that may be under control of a central owner organization such as an IoT owner organization 210. According to examples herein, M2M and/or IoT units may be referred to as IoT units or devices (*e.g.,* which may include both M2M units or device, IoT units or devices, and/or other similar devices or units) and may be devices that may include components such as those described with respect to the devices or WTRUs 102a-d in FIGS. 13A-13E. As shown in FIG. 1, the IoT units 202a-d02f may be controlled (*e.g.,* directly) by a back-end server such as a Device Management Server (DMS) 208 and/or by end user management clients or devices 212a, 212b smart phones, computers such as laptop computers or desktops, tablets, and/or the like. In examples, the DMS 208 and/or the end user management clients or devices 212a, 212b may belong to the owner organization 210. The end user management clients or devices 212a, 212b may control the end user devices or units (*e.g.,* 202a-202f) directly or through the DMS 208. According to an example (*e.g.,* when the management clients or devices may control the end user devices or clients through the DMS), the management clients or devices 212a, 212b may not have (*e.g.,* may not need to have) security associations with each of the IoT units 202a-202f as this may be provided and/or handled by the DMS 208 on behalf of the management clients or devices 212a, 212b.

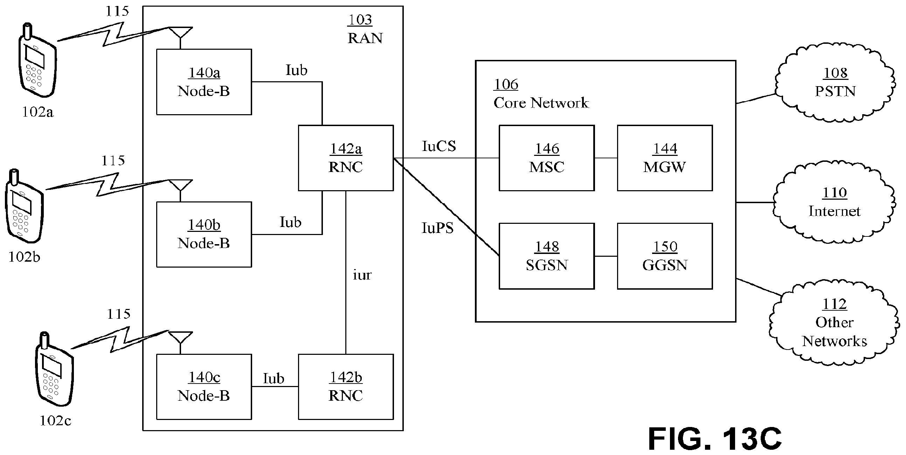

As shown in FIG. 1 (*e.g.,* to provide communication between the devices in the network 200 and/or to enable control by the DMS 208 and/or the management clients or devices 212a, 212b of the IoT units 202a-f), the IoT units 202a-f may have general Internet connectivity (*e.g.,* to the Internet 205), but the access network used may be of different types including, but not limited to, cellular access, WLAN access, fixed broadband access or corporate network access, and/or the like. For example, as shown in FIG. 1, the IoT units 202a-c may be connected to a WLAN 204 through which it may connect to the Internet 205 and/or the IoT units 202d-f may be connected to LAN 206 through which it may be connected to the Internet 205. In examples (not shown), one or more of the IoT units 202a-f may be connected to a cellular network (*e.g.,* that may be one or more of the networks described in FIGS. 13A and 13C-E) through which it may connect to the Internet 205 and/or one or more of the IoT units 202a-f may be directly connected to the Internet 205.

In examples herein (*e.g.,* as shown), the management client devices 212a, 212b and/or the DMS 208 may further be connected to the Internet 205 to control and/or manage the IoT units 202a-f. For example, as shown in FIG. 1, the DMS 208 and/or the management client or device 212b may be connected to a network provided by the owner organization 210. The network may provide connectivity to the Internet 205 such that the DMS 208 and/or the management client or device 212b may control and/or access the IoT units 202a-f. The management client or device 212a may be directly connected to the Internet 205 to control and/or access the IoT units 202a-f.

An end-to-end security channel 214a may be established (*e.g.,* through the network of the organization, the Internet, the WLAN, the LAN, a cellular network, and/or the like) between the DMS 208 and an IoT unit such as the IoT unit 202a as shown in FIG. 1 and/or between the management clients 212a, 212b and an IoT unit such as one or more of the IoT units 202a-f (not shown) to provide connectivity thereto and/or communication therebetween. For example, as described herein (*e.g.,* and shown, for example, in FIG. 1), as the IoT units may be connected to the Internet, they may be sensitive or subject to attacks (*e.g.,* during communication between the IoT units and the back-end system or server). To help prevent such attacks, the IoT units may be protected during communication with the owner organization 210 (*e.g.,* during communication with the DMS 208 and/or management clients or devices 212b and/or 212a that may not be in the location to (*e.g.,* may be external to) the owner organization or the network thereof). This may be done using end-to-end security channels such as the end-to-end security channel 214a (*e.g.,* as shown in FIG. 1). The end-to-end security channels (*e.g.,* 214a) may include and/or may be based on IPsec, TLS, DTLS, and/or the like. The end-to-end security channels may provide and/or use IoT unit unique credentials (*e.g.,* for each of the IoT units 202a-f, for example) that may be installed on the unit or device and may further be included or present on the DMS (*e.g.,* 208). As described herein, such channels may be used to help provide secure communication between IoT units and the back-end servers or systems

The IoT units may further be subject to attacks on the devices themselves such as via theft of the devices or hacking of the devices (*e.g.,* as well as the communication with the back-end system or server such as the DMS and/or management client or devices). To help prevent such attacks (*e.g.,* false use) of a device such as a personal computer (PC), a legitimate user may have or possess a token such as a special hardware token. In such an example, when this hardware token may be physically close to the PC (*e.g.,* the token may either be directly connected to the PC through a hardware interface or through a short range wireless link between the token and the PC), the PC may be operational (*e.g.,* fully operational). The PC may periodically issue challenges to the hardware token that may be operated by an end user. The end user may enter an authentication code into the hardware token, for example, to respond to challenges from the PC. The PC may be provided or kept in an operational state, *e.g.,* if the hardware token may be present and the periodic challenges may be correctly answered. Otherwise, access to the PC from or by the end user may be denied. This may help prevent a user who does not possess the hardware token from using the PC. If the hardware token may be stolen from or lost by the legitimate end user, the PC may not be operational.

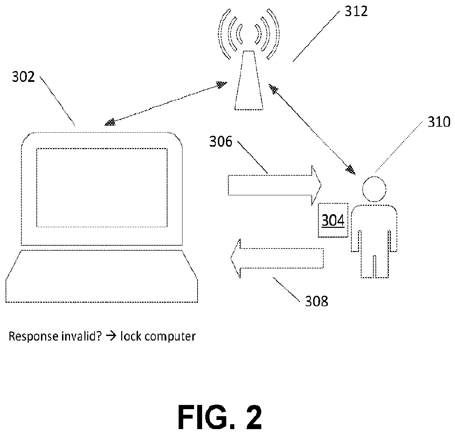

FIG. 2 illustrates an example of using challenge questions and/or a hardware token to deny access and/or keep a PC (*e.g.,* a computer, device, and/or the like) in an operational state. As shown in FIG. 2, a PC 302 may issue a challenge 306 to a hardware token 304 (*e.g.,* that may be controlled and/or be associated with an end user 310 as shown) at 320. Such a challenge 306 may be issued over a link 312, such as a wireless communication link that may enable communication between the end user 310 and the PC 302. The end user 310 may enter an authentication code (*e.g.,* as part of a response 308) into the hardware token 304, for example, to respond to challenges from the PC 302. The response 308 may be sent to the PC 302 and received thereby at 302. The PC 302 may be provided or kept in an operational state, for example, if the hardware token 304 may be present and the periodic challenges 306 may be correctly answered as part of the response 308. Otherwise, access to the PC 302 from or by the end user 310 may be denied.

A computer may be secured based on a local presence of a security token connected to a computer over a wireless link. Application memory on the PC or computer may be protected from attacks. For example, one or more selected application memory sections on the PC or computer may be encrypted if or when a legitimate user may leave the computer (*e.g.,* the token may not be close to the computer anymore) and may again decrypted when the user and the token may arrive again. The encryption process may be performed or done with the help of a key generation in the token using or based on a master key in the wireless token. PC or computer memory may be protected from attacks when the user may not be present (*e.g.,* physically close) with the PC.

The examples, for example, described above may connect the functionality of a device (*e.g.,* a PC or computer) to the physical presence of a hardware security token. A hardware security token may be used or provided in the example of FIG. 1, but as described above may not be directly applicable as the IoT units may not be directly operated by a human or end user (*e.g.,* a user may not be in proximity to the IoT and/or associated therewith to provide a response or to have a hardware token associated therewith). In the examples above (*e.g.,* FIG. 2 and the additional or alternative example similar to FIG. 2), the techniques or principles thereof that may apply to FIG. 1 may include or may be that, if an IoT unit may be stolen by an attacker, the attacker might obtain the credentials that may be used to set up secure channels between the IoT unit and the DMS. This may enable or allow the attacker to launch severe damage to the DMS system or, if the attacker may obtain the secret credentials of the IoT unit, to relay communication between the IoT unit and the DMS in the future over an own network and easily eavesdrop this communication (*e.g.,* if the IoT unit after the attack may be put back into the system or may be replaced with a different unit with valid credentials). As such, it may be beneficial or desirable having a technique or principle that may prevent an attacker from using local IoT credentials, *e.g.,* credentials that may be permanently stored on the IoT unit, for setting up secure valid channels with the DMS, for example, when the IoT is stolen.

The example above (*e.g.,* in FIG. 2) may not solve such a problem for one or more reasons. For example, the examples above may use a wireless hardware security token that may be present close to each of the IoT units. This may not be practical as the number of IoT units may be large (*e.g.,* very large). The examples above may use local wireless communication capabilities of the IoT unit, which also may be expensive if such functionality may not be needed for other purposes. A device locking mechanism that may be used for the examples herein may be hard to implement in a secure manner on a resource constraint device such as an IoT unit and/or an attacker with direct physical access may be able to read out credential information from the device even it is in a locked state (*e.g.,* may be locked and/or require a passcode or password to unlock the device).

The additional and/or alternative example similar to FIG. 2 described above may help with the device locking mechanism problem that may be provided by the example of FIG. 2 as this principle may be used to encrypt credential information whenever the IoT unit may be removed from a position close to the security token. On the other hand, the additional and/or alternative similar to FIG. 2 herein may have a security token to be present close to each IoT unit similar to the example of FIG. 2. Such an example may use the presence of a special purpose wireless security hardware token close to each IoT unit, which might be extremely expensive considering the huge number of potential IoT units in the system.

In an IoT system, communication between IoT devices may include sensitive data and/or IoT devices may use credentials to communicate with a management server (*e.g.,* the DMS) for such data. Unfortunately, theft of an IoT device may provide access to the credential such that spoofing or eavesdropping of such data may occur.

Systems, methods, and/or devices disclosed herein may provide the end-to-end security channel credentials to the IoT units using a local network key that may be generated and distributed to IoT units via a local network connection (*e.g.,* via only a local network connection and not via the Internet). This may help prevent access to such credentials upon theft or the theft of IoT device credentials (*e.g.,* without use of a locking mechanism or the use of a hardware token that may have to be close to each of the IoT devices). In such systems, methods, and/or devices, a secure device channel may be established or created with IoT units based on a combination of unit unique credentials and locally generated or distributed credentials. The locally generated credentials may be changed over time preventing the secure channel set up, for example, if the unit may be removed from its local network. This may prevent the IoT device from authenticating properly when stolen or removed from its legitimate network location. If the IoT device may be removed from its legitimate network location, the IoT device may not be able to receive locally generated credentials when they are changed. When the IoT device may attempt to communicate with the DMS, the DMS may recognize that the credentials of the IoT device are invalid and may decline to communicate with the IoT device, *e.g.,* may ignore or disregard a message from the IoT device.

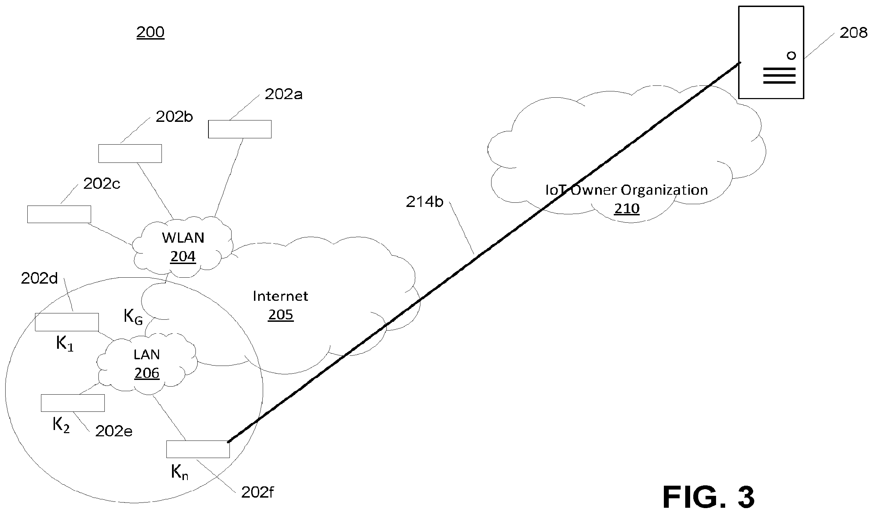

IoT units (*e.g.,* or IoT devices as used herein) and a DMS may set up secure communication channels using pre-shared symmetric keys to provide security credentials for IoT devices. Such a channel establishment may be available for and/or may include Transport Layer Security (TLS)/Datagram TLS, TLS/DTLS, and/or an IP security protocol, IPsec, for example. A key ID may be used such that another peer, *e.g.,* an IoT and/or a DMS (peers) for which a secure channel may be established therebetween using TLS, IPsec, and/or the like for them to determine and/or find a shared key for such a channel to be set up) may map the symmetric key to use for securing the connection. The key ID for an IoT unit may be or may be denoted by ID (*e.g.,* that may include keys and/or the like as described herein and where the $ID_u$ may be a unit unique part of the ID). Such an ID may be an identifier for the keys (*e.g.,* K1, K2, Kn, and/or the like) in FIG. 3, where each of these keys may have a unique identity such that the DMS may know or determine which key to use when securely communicating with the IoT unit. According to an example, the key ID may include at least one or more of the following: an IoT unit unique ID, $ID_U$; a local group ID, $ID_G$; a sequence number, *seq;* and/or the like (*e.g.,* ID parameters that may be used for the DMS to derive a session key, *e.g.,* KS, which may be used to protect the end-to-end security channel between the DMS and the IoT unit). An ID (*e.g.,* that may be include session parameters as described herein that may be used to find or determine $KS_{Gseq}$ that may be used for a session key) that may be used by the IoT unit, for example, to establish a secure end-to-end connection may be a value calculated by the combination of $ID_u$, $ID_G$, and *seq.* These IDs may correspond to shared secret keys between the DMS and the particular IoT unit and respectively between the DMA and the local group where the IoT unit may have its physical presence. This may be shown in FIG. 3.

FIG. 3 illustrates an example of providing a shared secret or key in a group for one or more examples described herein. As shown in FIG. 3, according to an example, one or more of the IoT units or devices may be grouped together in a group such as group G. For example, the IoT units 202d, 202e, and 202f may be grouped in group G. The IoT unit 202d may have or include a key or key ID corresponding to $K_1$, the device 202e may have or include a key or key ID corresponding to $K_2$, and/or the device 202f may have or include a key or key ID corresponding to $K_N$. The group G may have a local group shared key or secret $K_G$. As shown, a security channel 214b may be established between the DMS 208 and the IoT unit 208f in group G to exchange data and/or to communicate there between as described herein. The channel may be protected by $K_N$ and a session group key (*e.g.,* $KS_{Gseq}$) that may derived from $K_G$.

Such a local group key may not be stored on the IoT units, but instead may be used to (*e.g.,* with some regularity) create and distribute, using local distribution (*e.g.,* as described herein in examples), the local session group key, $KS_{Gseq}$, that may be calculated using the shared local group key, $K_G$. These session group keys may be recorded by the IoT units (*e.g.,* 202d-202f) in a local group (*e.g.,* group G) and used together with the IoT secret (*e.g.,* $K_1$, $K_2$, and $K_n$) to protect the end-to-end security channel (*e.g.,* 214b) with the DMS (*e.g.,* 208).

IoT units may use one or more of the following for obtaining keys and setting up secure channels with the DMS. The IoT units described herein (*e.g.,* such as those in group G or 202d-f) may use a suitable pre-shared key protocol to set up secure channels with the DMS (*e.g.,* 208) and a key identifier associated therewith or generated thereby may be based on at least one or more of the following parameters: $ID_U$, $ID_G$, *seq.* One or more session group keys, $KS_{Gseq}$, may be (*e.g.,* with some regularity) generated or calculated using a sequence number, *seq* and a group key, $K_G$ and may be distributed using a local distribution procedure, method, mechanism, or technique (such as local wired broadcast/multicast, local wireless broadcast/multicast, and/or the like) to the IoT units in a group (*e.g.,* 202d-202f in group G of FIG. 3).

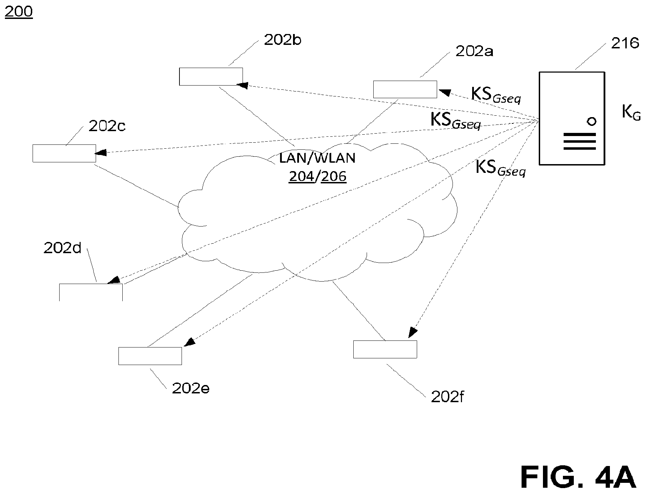

The secure channels between the IoT units in the group and the DMS may be protected with a symmetric key calculated using the combination of an IoT individual secret and the session group key, $KS_{Gseq}$. The session group key $KS_{Gseq}$, may be calculated and locally distributed among the IoT units in the group using one or more of the following examples (*e.g.,* as illustrated in FIGS. 4A-6).

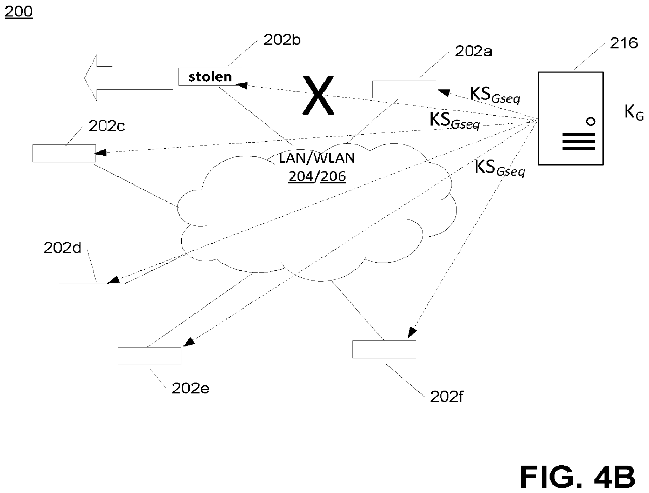

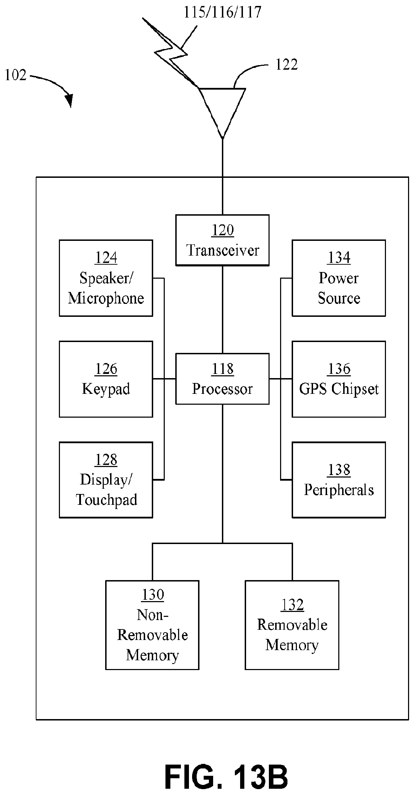

FIGS. 4A-4B illustrate examples of distribution of a session group key using a distribution device, such as a group key unit that may be used to protect device credentials for a device such as an IoT device or unit that may be compromised as described in examples herein. As shown, a group key unit or component (*e.g.,* a computer, server, database, device, and/or the like such as that with one or more components as shown in FIG. 13B) such as a group key unit 216 (*e.g.,* which may be a special hardware unit with good physical protection) may be provided in the local network (*e.g.,* the LAN 204 and/or WLAN 206). The group key unit or component (*e.g.,* 216) may generate and/or store (*e.g.,* hold) the group key $K_G$, and the index, *seq,* that it may update. According to an example, the group key unit or component (*e.g.,* 216) may calculate and distribute in the local LAN or WLAN (*e.g.,* 204 or 206) the corresponding session group key $KS_{Gseq}$ using suitable wireless communication technology such as Wi-Fi, Bluetooth, ZigBee or the like and/or a wired IP communication medium together with local broadcast in the LAN or WLAN. Such a scheme as well as those shown in FIG. 3, 5, and 6 may help protect credentials and/or may help prevent security channels from being compromised between the IoT devices and the DMS (*e.g.,* 208) for devices that may be stolen (*e.g.,* 202b as shown in FIG. 4B) as described herein (*e.g.,* without using a hardware token associated with such a unit or device that may be in proximity thereto).

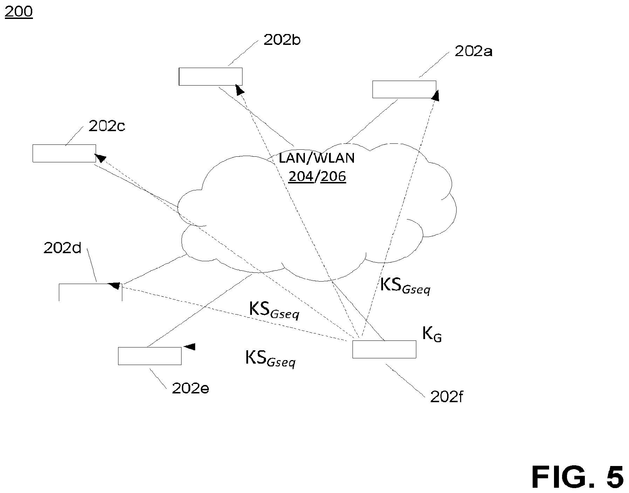

FIG. 5 illustrates an example of distribution of a session group key using a device or unit such as an IoT device or unit that may be used to help protect device credentials for a device such as an IoT device or unit that may be compromised as described in examples herein. For example, as shown, one or more of the existing IoT units (*e.g.,* 202f in FIG. 5) may have better physical protection of non-volatile storage and execution environment (*e.g.,* than the other IoT units in the local group). Such an IoT unit (*e.g.,* 202f) may generate and/or store (*e.g.,* hold) the group key $K_G$, and the index, *seq,* that it may update. The IoT unit (*e.g.,* 202f) may further calculate and distribute the corresponding $KS_{Gseq}$ either using suitable wireless communication technology, such as Wi-Fi, Bluetooth, ZigBee or the like, or using a wired IP communication medium together with local broadcast in the LAN or WLAN (*e.g.,* 204 and/or 206).

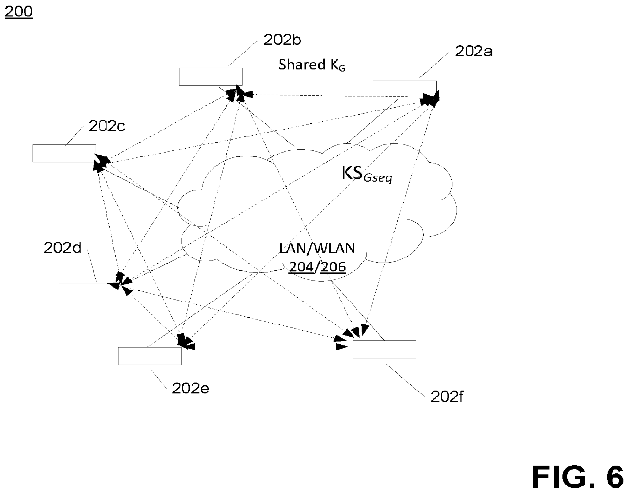

FIG. 6 illustrates an example for calculating a group key for joint derivation of session group keys that may be used to help protect device credentials for a device such as an IoT device or unit that may be compromised as described in examples herein. The IoT units (*e.g.,* 202a-f) may use a group or threshold cryptographic scheme (*e.g.,* such as a Shamir secret sharing scheme) to jointly calculate and agree on the session group key, $KS_{Gseq}$, for each updated index *seq.* Different IoT units may use different session group keys for the same sequence number. The communication techniques or methods (*e.g.,* such as local broadcast/multicast, round robin distribution, pair-wise mutual exchanges, distribution chains, and/or the like) that may be used to agree on the session group key may be of any kind or type (*e.g.,* such direct key generation by one unit and then broadcast, multiparty computation, threshold cryptography, and/or the like) as long as each unit in the group (*e.g.,* the group G or any other group of IoT units such as 202a-f as shown in FIG. 6) may be able to reach the other units in the group.

IoT unit credentials may be protected from being misused or stolen by using a combination of a unit unique secret symmetric key and a local session group key, which may be regularly updated and distributed in the local network and where both these keys may be used for setting up secure connections (*e.g.,* the channels) between the IoT unit and the back-end management system (*e.g.,* the DMS).

The examples herein may target the weakness of current IoT systems that may use symmetric and public-private key pairs for the protection of the communication channel with the back-end system with respect to the risk that the IoT unit keys might be stolen or lost as the IoT units often may not be suitably physically protected and there may be a lack of protection for the stored keys/credentials. The examples herein may disclose that the symmetric key that may be used to set up secure channels with the back-end system may be a combination of a device unique key and a local session group key. It may be able to securely authenticate itself and set up security channels with the back-end system, *e.g.,* if the IoT device may have access to both keys. An IoT unit that may be removed from the local network may no longer have access to the local session group key, *e.g.,* after an amount of time, such as a short duration. An attacker who has stolen the device may be not be able to fool the back-end system as the attacker may not have access to the needed local session group key, *e.g.,* unless the attacker may also simultaneously attack the local network to obtain the local session group key as well. Such an attack may be easier for the owner of the IoT system to detect as that may use continuously local presence by the attacker at the local network. As the local session group key by itself may not be enough for setting up secure session, an IoT unit on the same local network may not be able to impersonate another IoT unit unless the unit may be explicitly attacked and the unique secret of the unit may be obtained.

Use of a unique combination of a local key and a unit specific key for secure channel establishments with a back-end system, may help protect credentials on the IoT device that may otherwise be rather weak. An IoT unit may be protected from attacks without the use of special purpose hardware or a special cover package. A high level of security may be obtained with standard hardware and software for the IoT unit, allowing usage of off-the-shelf technology for the IoT unit which gives a very attractive production cost.

Example methods may be provided as described herein to implement the local group key and session group key. For the examples herein, one or more of the following (*e.g.,* notations) may be used and/or defined. A local group of IoT units on a LAN may be defined or denoted by *G,* and/or one particular such IoT unit in this set by $U_i \in G$. The key holding and key generation unit G may be denoted or defined by *R*. The group master key that may be shared between *R* and the DMS may be denoted or defined by $K_G$. A session group key index by $l = 0,1,2,... ,r$ and a session group key for index *l* in the group *G* by $KS_{Gl}$. The number of units in *G* may be denoted by $n = |G|$. For each of the IoT units in the group (*e.g.,* $\forall\ U_i \in G$), $K_i$ may be denoted as a shared secret key shared between unit $U_i$ and the DMS. $ID_{Ui}$ may denote or define the identity of the unit $U_i$ and/or $ID_G$ may denote or define the identity of the group *G*. A time (*e.g.,* a clock value that may be used to synchronize the session group key generation system to indirectly determine the time validity of the group session keys and to be used to determine when the unit R may generate group session keys) given by a clock hosted by *R* may be denoted by *t1* and/or a time given by a clock hosted by the DMS may be defined or denoted by *t2*. *tc* may define or denote a time constant used by the system to set session group key updated frequency. *tc* may be a time constant that may be used to compare the specific clock values used by *R* and the DMS respectively to determine or know the key update frequency rate. *max* may define or denote the maximum number of session group keys that may be allowed to be used for a single generated group key, $K_G$.

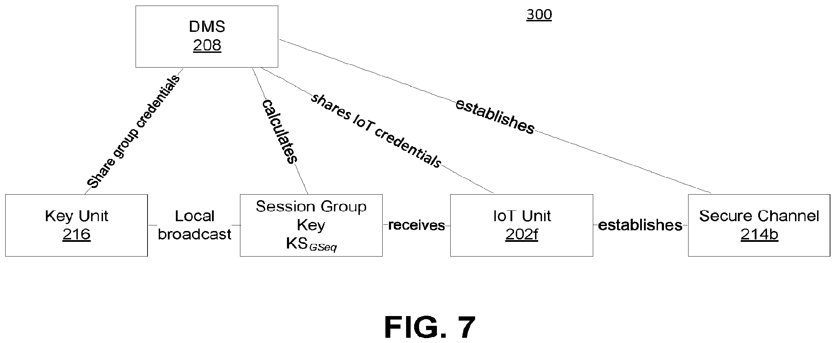

FIG. 7 illustrates an example entity relationship diagram for providing a group key that may be used that may be used to help protect device credentials for a device such as an IoT device or unit that may be compromised as described in examples herein. A DMS (*e.g.,* 208) may share group credentials between a key unit (*e.g.,* 216) and IoT credentials between an IoT unit (*e.g.,* 202f as shown but also 202a-e). The DMS may generate or calculate a session group key (*e.g.,* $KS_{Gseq}$) that may be broadcast by the key unit to the IoT unit. The IoT unit may receive the session group key. A secure channel (*e.g.,* 214b) may be established between the IoT unit and the DMS using the session group key and/or IoT credentials.

To provide a local key and/or generate a session key as described herein, an IoT administrator may invoke or initiate a suitable process (*e.g.,* such as directly physical transfer/configuration and/or through a protected communication process between the DMS and R) to generate and install a group master key $K_G$ that may be stored at the DMS and at *R.* The corresponding group key ID, $ID_G$, value may also be stored at the DMS. The index *I* may be set to 0 and may be stored both at R and at the DMS. The IoT administrator may use a suitable process (*e.g.,* such as directly physical transfer/configuration and/or through a protected communication process between the DMS and R) to securely generate and install individual symmetric keys for IoT units in *G,* i.e. $\forall U_i \in G$ a key $K_i$ may be generated and stored in the DMS and with as good protection as possible at the unit $U_i$ and a unique ID, value for $U_i$, $ID_{U_i}$ may be generated and stored both at the DMS and at $U_i$.

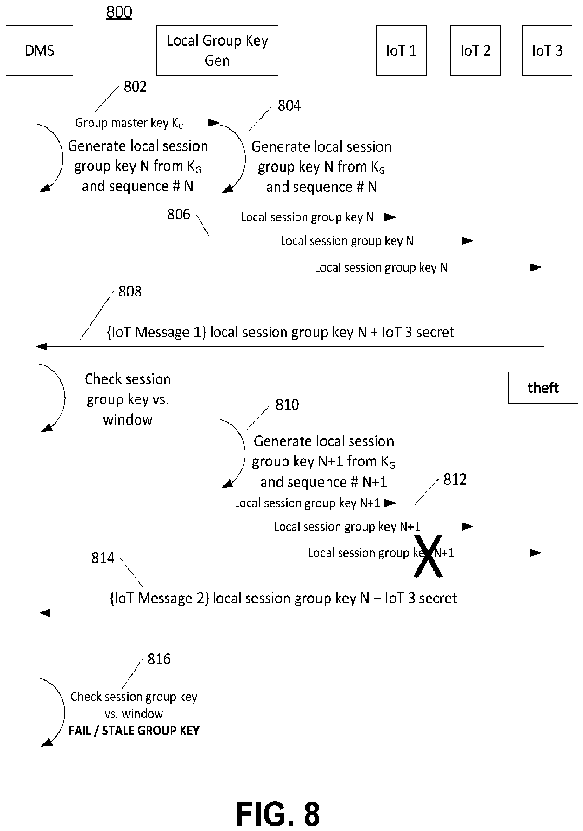

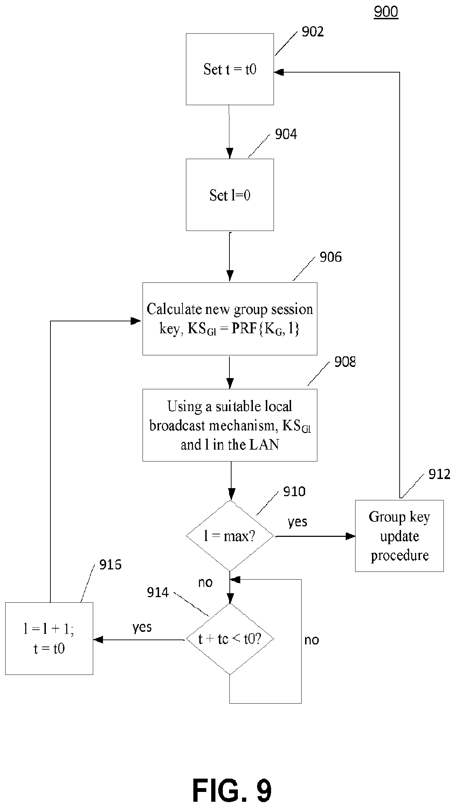

During operation, keys that may be used to set up and protect secure channels between the IoT units and the DMS may be generated and secure channels may be established between the IoT units and the DMS. Protecting communication may be shown in FIG. 8. The key generation unit, the DMS, and/or at the IoT units may be described in connection with FIGS. 9-11.

FIG. 8 illustrates an example flow diagram of a flow 800 for securing communications between IoT devices or units and a back end server such as a DMS (*e.g.,* in case an IoT device may be compromised). Secure communications between IoT devices and a device management server may be managed (*e.g.,* in case of an attack or theft). For example, a group master key $K_G$ may be received at a local key generation unit or a particular IoT attached to a local area network. At the local key generation unit or the particular IoT, a first session group key may be generated at 804 using the received group master key $K_G$ and a sequence number (n). The first session group key may be sent from the local key generation unit to each of a plurality of IoT devices via the local area network (*e.g.,* only via the local area network and not via the Internet) at 806. At 808, each IoT device of the plurality of IoT devices may use both the first session group key received from the local key generation unit on the local area network and a pre-shared unique unit key for that IoT device to establish an end-to-end channel for the IoT device to a device management server (DMS) (*e.g.,* that may not be on the same local area network). The first session group key and the pre-shared unit key may be combined, for example, by concatenating the first shared group key and the pre-shared unit key. The concatenated keys may be used to encrypt a message that may be sent to the DMS to establish the end-to-end channel with the IoT device. The first session group key and the pre-shared unit key may be combined by using them as input parameters to a cryptographic function, such as a pseudorandom function (PRF). The output of the cryptographic function may be used to encrypt a message that may be sent to the DMS to establish the end-to-end channel with the IoT device.

The DMS may accept or receive communications from the IoT devices using the first session group key during a determined time interval associated with the sequence number (n) used in generation of the first session group key. The first session group key may be sent by sending an indication of the sequence number used in generation of the first session group key. As shown and described herein, communication from the IoT device to the DMS may comprise an ID comprising an indication of the sequence number used in the generation of the first session group key. At the local key generation unit or the particular IoT, using the group master key $K_G$, a second session group key (*e.g.,* wherein generation may use a sequence number (n+1)) may be generated at 810. The second session group key may be sent from the local key generation unit to each of a plurality of IoT devices (*e.g.,* except the particular IoT that may generate such a group key) at 812.

A message encrypted using the first local session group key may be sent from a first compromised IoT device of the plurality of IoT devices to a DMS. The DMS may receive the message from the first compromised IoT device at 814 and may determine at 816 whether the first session group key may be valid. The message may be disregarded (*e.g.,* by the DMS) from the first compromised IoT device, *e.g.,* responsive to a determination that the first session group key may no longer be valid. One or more windows may be provided and/or used as described herein.

FIG. 9 illustrates an example flow diagram of a flow 900, at a key generation device or unit (*e.g.,* as shown in FIGS. 4A-5), for using a group key that may be used to help protect device credentials for a device such as an IoT device or unit that may be compromised as described in examples herein. The IoT unit *R* may keep the index counter *I* fairly synchronized with the DMS. This may provide that *I* may be updated by *R* and the DMS about or almost at the same time (*e.g.,* but not strictly as it may work without full synchronization). This principle together with the initialization values obtained as described herein may enable or allow *R* to use the flow 900 for updating and distributing a key. At 902, a time variable may be set as *t = t0* and the session group key may be set as *I = 0,* at 904. At 906, a session group key may be calculated (*e.g.,* by R) as $KS_{GL} = PRF(K_G, I)$. The session

group key may be distributed at 908. A local wireless protocol such as WiFi or a LAN local broadcast method (*e.g.,* for IPv4 the local broadcast mechanism and/or for IPv6 link-local addressing) may be used (*e.g.,* by $R$) to distribute $KS_{GI}$ together with $I$ in the LAN. To distribute $KS_{GI}$, a message may be sent in clear (*e.g.,* it may be sent unencrypted) in the LAN. This key may be sent using a protected broadcast using a suitable key shared with the IoT units in $G$. The message may be repeated to increase robustness. At 910 (*e.g.,* if $I = max$), the unit $R$ may be set into pause mode and may not become active again until an updated group key, $K_G$ may be securely installed (*e.g.,* via a group key update procedure at 912) and may return to 902. If $I$ does not equal $max$ at 910 and/or if $t + tc < t0$ at 914), the index $I$ may be incremented, $I = I + 1$, $t = t0$ at 916, and flow may return to 906. Otherwise (*e.g.,* if $t + tc$ may not be less than $t0$), 914 may be repeated (*e.g.,* in a loop as shown).

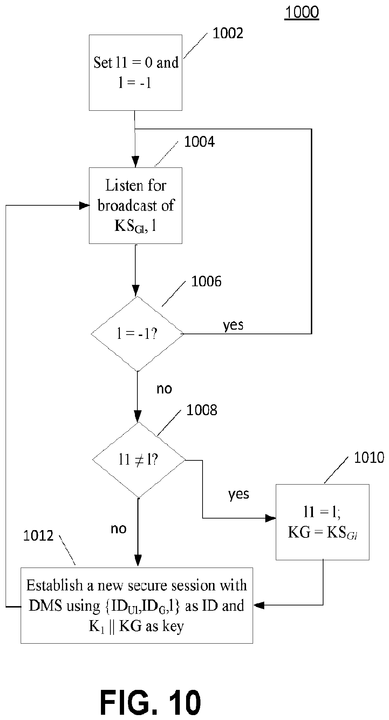

FIG. 10 illustrates an example flow diagram of a flow 1000, at an IoT device or unit, for using a group key that may be used to help protect device credentials for a device such as an IoT device or unit that may be compromised as described in examples herein. According to examples, the flow 1000 may be performed for each of the units (*e.g.,* 202a-f) within a group (*e.g.,* group G). At 1002, $I1 = 0$ and $I = -1$ may be set. A unit may listen (*e.g.,* $U_i$) and may receive a session group key message, $KS_{GI}$, $I$, from the key unit $R$ over the LAN at 1004. 1004 may be repeated, for example, if $I = -1$ at 1006. Otherwise, it may be determined whether $I1 \neq I$ at 1008. According to an example (*e.g.,* if $I \neq I1$ at 1008), $I1 = I$ may be set and a current session group key, $KG$ may be $KG = KS_{GI}$ at 1010. A secure session (*e.g.,* a channel) may be established at 1012, *e.g.,* if 1 equals 11 at 1008 and/or after setting 1 to equal 11 and/or the session group key at 1010. $U_i$ may use the following parameters as an identifier in the secure channel set up, *e.g.,* if a secure session may be about to be established with the DMS: $\{ID_{Ui}, ID_G, I\}$ and the symmteric key: $K_i \| KG$ to authenticate and secure the established security channel. Flow may then return to 1004 as shown in one example.

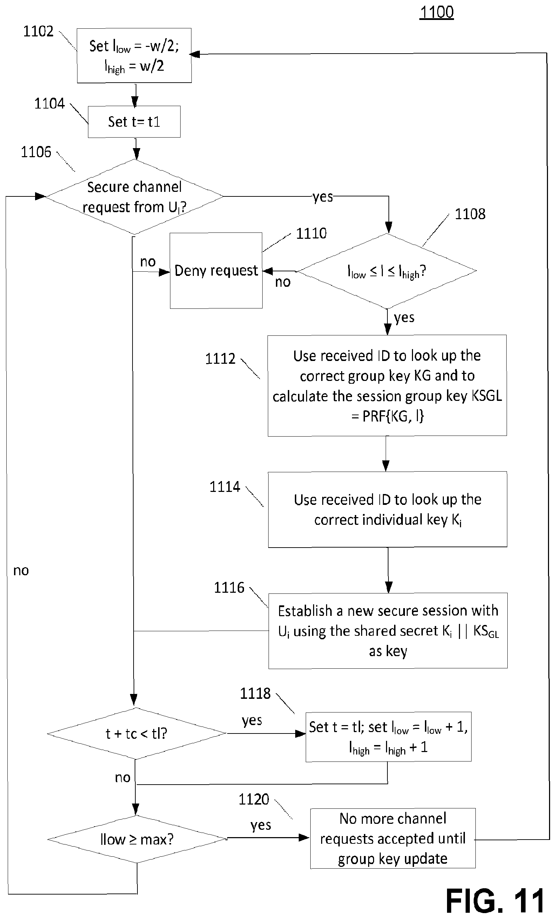

FIG. 11 illustrates an example flow diagram of a flow 1100, at a DMS, for using a group key that may be used to help protect device credentials for a device such as an IoT device or unit that may be compromised as described in examples herein. According to one example, the DMS may use a window approach to accept or not accept session group keys and their corresponding indices. The size of this window may be defined by w, which may be a suitable even integer value. According to examples, the flow 1100 may be performed for each potential LAN group (*e.g.,* although described with respect to one) that may be controlled by the DMS. For these groups, the DMS may choose or select to use the same clock for each of the groups or a separate clock or a general clock plus an offset to manage the index window update for these groups. As shown, at 1102, $I_{low} = -w/2$ and $I_{high} = w/2$ may be set and at 1104, a time variable $t = t1$ may be set. At 1106, the following may be performed (*e.g.,* if a secure channel establishment request maybe received from $\exists U_i \in G$). At 1108, the DMS may determine or check the received ID from the connecting unit and check or determine if the received index value $I$ may be within the accepted window, i.e. $I_{low} \leq I \leq I_{high}$. If not, the secure connection procedure may be aborted or stop at 1110. Otherwise, at 1112, the DMS may use the received group key ID, $ID_G$ and the received index value $I$ to obtain the session group key used by the connecting unit, $KS_{GL} = PRF(K_G, I)$. At 1114, the DMS may use the received unit ID, $ID_{Ui}$ to look up the individual unit key, $K_i$ and at 1116, an authenticated and confidentiality protected secure channel with $U_i$ may be established base on the secret key $K_i \| KS_{GI}$. At 1118 (*e.g.,* if $t + tc < t1$), the time variable $t = t1$ may be set and $I_{low}$ and $I_{high}$ may be incremented as $I_{low} = I_{low} + 1$ and $I_{high} = I_{high} + 1$. At 1120 (*e.g.,* if $I_{low} \geq max$), the DMS may not accept connections from IoT units in the group G until a group key update has been performed (*e.g.,* as described herein), and the method may return to 1102. Otherwise (*e.g.,* if $I_{low}$ may be less than or equal to max), the method may return to 1106 as shown.

One or more examples herein may use symmetric keys where such keys may have or use good security practice and/or may be renewed or updated with some regularity. This may apply both to the shared group key and the individual unit keys. A group key may be updated. A secure channel (such as a PSK TLS channel) may be established between the DMS and the key unit using the already shared group ID, $ID_G$, and group key, $K_G$. Once this channel may be established, the DMS may send an updated group key to the unit. A unit key may be updated. Examples herein may describe how to create secure channels between arbitrary IoT units and the DMS. Such channels may be used for secure management routines on the IoT unit. This channel may be used for sending updated credential information from the DMS to the IoT unit.

IoTs may be secured, *e.g.,* if they may be stolen or compromised. IoT unit-based session group keys distribution may be provided and/or used. No special session group key distribution unit may be present in the LAN, but a special IoT unit in the network may take this role instead. This IoT unit may have support to protect keys and key generation through special purpose hardware or through special physical protection making it harder to attack than the other IoT units in the network. The principle may be illustrated in FIG. 5. The methods described herein (*e.g.,* including the methods 800, 900, 1000, and/or 1100) may apply to this example, for example, by replacing the key unit role with the role of the special purpose IoT unit (*e.g.,* 202f may perform the flow 800 instead of the unit 216). This IoT unit (*e.g.,* 202f shown in FIG. 5) may not listen for session group key broadcast but may directly use the session group key it has generated itself when establishing secure session with the DMS).

A group based joint calculation of session group keys may be provided and/or used. Session group keys may not be locally broadcasted by a particular unit in the LAN responsible for this, but instead jointly calculated as illustrated in FIG. 6. This may provide or imply that the group secret value may be shared between the DMS and several IoT units instead of just one particular IoT unit as in the additional examples herein. This may also provide or imply that the session group key calculation procedure at the IoT side may be different from the example of a key generation unit and also that the key derivation mechanism at the DMS may be different from example of the key generation unit. In a set up phase, $K_G$ may not be generated and stored at the DMS. Instead, the DMS may use group session key input from at least $l$ out of $n$ units for approving a session key from an individual IoT unit. These contributions may be calculated using the group key index and the individual distributed IoT secrets, $K_1, K_2, ..., K_n$. In an operation phase, each IoT unit may use an internal function, $F(K_i, l)$, to calculate session group key calculation share, $KS_i = F(K_i, l)$, that may be distributed in the local network. Each unit may collect at least $t-1$ such group key calculations shares from other units and may use a suitable session group key calculation function, $S$, to calculate the session group key, $KS_{GL} = S(KS_{v1}, KS_{v2}, ...., KS_{vt})$. At secure channel establishment, the session key group calculation at the DMS may be similar to the additional examples but may differ in that the DMS at secure channel establishment also may get information about the group of $t$ devices that was involved in the $KG_{GI}$ key calculation process in order to be able to obtain the correct session group key. The key update procedure may differ (e.g., from the other or additional examples) in that, at key update, no group key update may occur separately. A group key update may occur when the individual keys may be updated on a particular IoT unit $U_i$.

There may be different options for how the units may use a joint function to calculate session group keys. Without loss of generality, a particular session group key calculation option may be based on simple summation of group key shares. A set up phase may be performed. The set up phase may be the same or similar to other examples described herein except that the DMS may not distribute any group key.

The IoT units may perform actions as follows (e.g., may include the actions in flow 900 but may differ as follows). The IoT units in the group G may synchronize their group key index values $l$. 1004 and 1006 in the flow 1000 may be replaced with the following. $U_i$ may use a suitable PRF to calculate an individual group key contribution share, $MK_i = \mathrm{PRF}(l, K_i)$. $U_i$ may broadcast $\{i, MK_i\}$ in the local group G. For a subgroup B (including the unit $U_i$ itself) of G of size $t = |B|$, $U_i$ may collect (from broadcast of the other units) $t-l$ additional local share values and the corresponding share indices, $\forall v \in B - U_i$, and may

calculate $D = \sum_{j=1}^{t} MK_{v_j}$ (e.g., that may be calculated over a suitable finite field). $U_i$ may calculate the session group key as $KS_{GI} = \mathrm{PRF}(D, l)$. Different IoT units may use different session group keys, but the scheme may work anyway as the units may also record information of the set B that may be used by the particular IoT units to calculate the session group key. 1012 of flow 1000 may be replaced with the following. If a secure session may be about to be established with the DMS, for example, $U_i$ may use the following parameters as identifiers in the secure channel set up: $\{ID_{U_i}, ID_G, l, B\}$, where the set B may be defined by the index list $B = \{v_1, v_2, ..., v_t\}$, and the symmetric key: $K_i \| KS_{GI} =$ may be used to authenticate and secure the established security channel.

The DMS may perform one or more of the following (e.g., may include the actions in flow 1100 but may differ as follows). 1106 of the flow 1100 may be replaced by the following. If a secure channel establishment request may be received from $\exists\, U_i \in G$, the following may apply and/or may be performed. The DMS may use the received unit ID, $ID_{U_i}$, to look up the individual unit key, $K_i$ as well as the received set information, $B$, to look up the individual keys in the group key calculation set, $\forall v \in B - U_i$, $K_v$. The DMS may use the received group key ID, $ID_G$, the received index value $l$ and the individual keys from the set B to calculate: $D = \mathrm{PRF}(l, K_{v_1}) + \mathrm{PRF}(l, K_{v_2}) + \cdots + \mathrm{PRF}(l, K_{vt})$. The session group key: $KS_{GI} = \mathrm{PRF}(D, l)$ may be calculated, An authenticated and confidentiality protected secure channel with $U_i$ may be established based on the secret key $K_i \| KS_{GI}$.

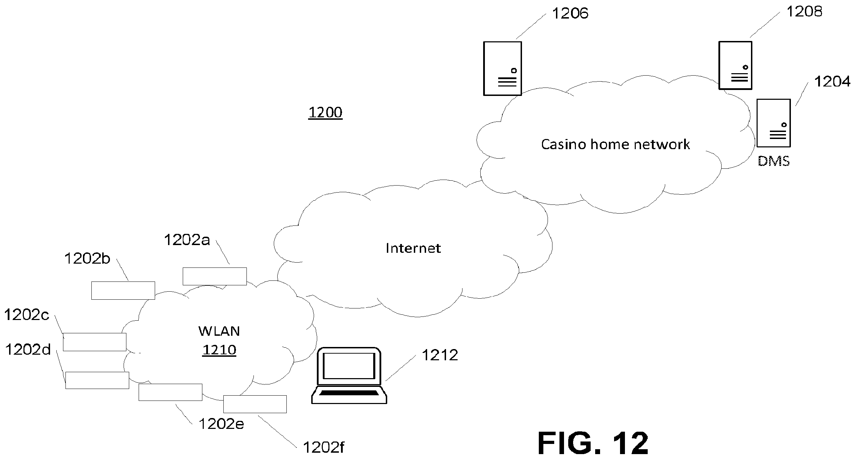

FIG. 12 illustrates an example of an industry system in which one or more examples described herein may be used and/or implemented. As shown, a mobile casino system 1200 may implement one or more of the examples described herein. In this scenario, a variety of different game units 1202a, 1202b, 1202c, 1202d, 1202e may be placed or put on site at a location such as a temporary sports event, festival, or the like. The casino system 1200 may include different game units. Some of these game units may have a heavy weight and may be hard to steal or remove while other game units may be mobile computer units that may be easy to move and install but also easy to remove or steal. The game units may correspond to the IoT units according to the examples described herein. The different gaming machines may be controlled by a central management system, e.g., which may be or may include a casino banking system 1206. This system may not be present at the mobile casino site but at a protected central location. A DMS 1204 may provide the DMS functionality according to the examples herein. A special physical protected (hard metal cover and physically locked) unit 1212 with communication capabilities may be handling the group keys and may be part of the mobile casino installation. This unit 1212 may correspond to the key unit according to the example herein (*e.g.,* and may be shown in FIG. 12). The mobile casino may be under control and under surveillance by humans employed by the mobile casino provider. Such humans may guard the mobile casino but may not have full control of the game units 1202a, 1202b, 1202c, 1202d, 1202e and may be able to merely see that no major trouble occurs at the mobile casino site.

The mobile casino company may arrive at a site and may install the mobile casino system at this site. One or more of the following may be performed. A local WLAN system 1210 may be configured on the site. Each of the casino units may have WLAN capability and may be configured with strong WLAN standard WiFi Protected Access (WPA2) communication keys that may be used for the communication in the WLAN. The key unit 1212 may be installed in the WLAN sharing a group key, $K_G$, with the central casino banking and management system. The key unit 1212 may generate and locally distribute session group keys. The keys that may be used for secure remote communication with the units in the mobile casino system may be stored and managed by a key server 1208, which may be located at the central casino banking and management system. This key server 1208 may store this group key. The game units may be installed in the local site and each of these game units may have WLAN capabilities and that they may be pre-configured with individual secrets, $K_0, K_1, K, ....., K_n$. These secrets may also be stored in the key server 1208 at the casino home network.

One or more of the following may be performed or applied, for example, when the mobile casino may be in operation. The key unit 1212 may with some regularity broadcast session group keys, $KS_{GI}$, to each of the game units 1202a, 1202b, 1202c, 1202d, 1202e in the WLAN. These keys may be protected under the local WPA communication protection keys. The game units 1202a, 1202b, 1202c, 1202d, 1202e may be in operation and may report gaming results to the home banking system. This may include information such credit card information, game results and money transfer request depending on the game outcomes. Communication with the casino bank system 1206 may be protected with pre-share key TLS links. For one particular game unit, $U_i$, the keys that may be used to protect these link may be the combination of the individual unit key, $K_i$, and the session group key, $KS_{GL}$ according to the examples described herein. The home banking system may connect to the key server 1208 in the home network to obtain the key information for secure communication with the game unit.

According to the example of FIG. 12, an attacker may desire to fool the casino banking system of the outcome of the game of individual casino gaming units. The attacker may then remove or replace one of the gaming units in the mobile casino system with the purpose of taking it away for analysis such that he/she may be able obtain the unit specific key. The attacker may not be able to fool the home bank system by trying to set up secure sessions from another location as he/she may not at this location have access to the needed session group keys. As such, it may be considerably harder for the attacker to fool the casino banking system despite having direct physical access to a gaming unit. The attacker may try to put a network device close to the mobile casino site with the purpose of trying to intercept the session group keys in addition to the unit-specific shared secret that he/she may already possess. To succeed with this, the attacker may break the local WPA keys for the mobile casino and be able to put a WLAN device at the local site that can intercept the session group keys and forward them to the attacker device. This may in practice be so cumbersome that it may be very hard for the attacker to do this prior to the time that the casino owner may find out that a game unit may have been stolen or replaced. If this may be detected by the casino owner, the individual key of the stolen or replaced unit may be revoked at the central key server. As such, the examples herein that may be used in a casino system may put considerable additional burden on the attacker and may give a more robust (from security point of view) system.

The examples herein may be applicable to a broad set of IoT use cases covering many different business segments and application areas.

FIG. 13A depicts a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. The communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 13A, the communications system 100 may include wireless transmit/receive units (WTRUs) 102a, 102b, 102c, and/or 102d (which generally or collectively may be referred to as WTRU 102), a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, and/or 102d may be any type of device configured to operate and/or communicate in a wireless environment. By way of example, the WTRUs 102a, 102b, 102c, and/or 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, and/or 102d to facilitate access to one or more communication networks, such as the core network 106/107/109, the Internet 110, and/or the networks 112. By way of example, the base stations 114a and/or 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. The base station 114a may include three transceivers, i.e., one for each sector of the cell. The base station 114a may employ multiple-input multiple output (MIMO) technology and, therefore, may utilize multiple transceivers for each sector of the cell.

The base stations 114a and/or 114b may communicate with one or more of the WTRUs 102a, 102b, 102c, and/or 102d over an air interface 115/116/117, which may be any suitable wireless communication link (e.g., radio frequency (RF), microwave, infrared (IR), ultraviolet (UV), visible light, etc.). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, and/or 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

The base station 114a and the WTRUs 102a, 102b, and/or 102c may implement a radio technology such as Evolved UMTS Terrestrial Radio Access (E-UTRA), which may establish the air interface 115/116/117 using Long Term Evolution (LTE) and/or LTE-Advanced (LTE-A).

The base station 114a and the WTRUs 102a, 102b, and/or 102c may implement radio technologies such as IEEE 802.16 (i.e., Worldwide Interoperability for Microwave Access (WiMAX)), CDMA2000, CDMA2000 IX, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 13A may be a wireless router, Home Node B, Home eNode B, or access point, for example, and may utilize any suitable RAT for facilitating wireless connectivity in a localized area, such as a place of business, a home, a vehicle, a campus, and the like. The base station 114b and the WTRUs 102c, 102d may implement a radio technology such as IEEE 802.11 to establish a wireless local area network (WLAN). The base station 114b and the WTRUs 102c, 102d may implement a radio technology such as IEEE 802.15 to establish a wireless personal area network (WPAN). The base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 13A, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over Internet protocol (VoIP) services to one or more of the WTRUs 102a, 102b, 102c, and/or 102d. For example, the core network 106/107/109 may provide call control, billing services, mobile location-based services, pre-paid calling, Internet connectivity, video distribution, etc., and/or perform high-level security functions, such as user authentication. Although not shown in FIG. 13A, it will be appreciated that the RAN 103/104/105 and/or the core network 106/107/109 may be in direct or indirect communication with other RANs that employ the same RAT as the RAN 103/104/105 or a different RAT. In addition to being connected to the RAN 103/104/105, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, and/or 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the Internet protocol (IP) in the TCP/IP Internet protocol suite. The networks 112 may include wired or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, and/or 102d in the communications system 100 may include multi-mode capabilities, i.e., the WTRUs 102a, 102b, 102c, and/or 102d may include multiple transceivers for communicating with different wireless networks over different wireless links. For example, the WTRU 102c shown in FIG. 13A may be configured to communicate with the base station 114a, which may employ a cellular-based radio technology, and with the base station 114b, which may employ an IEEE 802 radio technology.

FIG. 13B depicts a system diagram of an example WTRU 102. As shown in FIG. 13B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment. The base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or all of the elements depicted in FIG. 13B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 13B depicts the processor 118 and the transceiver 120 as separate components, it may be appreciated that the processor 118 and the transceiver 120 may be integrated together in an electronic package or chip.

The transmit/receive element 122 may be configured to transmit signals to, or receive signals from, a base station (*e.g.,* the base station 114a) over the air interface 115/116/117. The transmit/receive element 122 may be an antenna configured to transmit and/or receive RF signals. The transmit/receive element 122 may be an emitter/detector configured to transmit and/or receive IR, UV, or visible light signals, for example. The transmit/receive element 122 may be configured to transmit and receive both RF and light signals. It will be appreciated that the transmit/receive element 122 may be configured to transmit and/or receive any combination of wireless signals.

Although the transmit/receive element 122 is depicted in FIG. 13B as a single element, the WTRU 102 may include any number of transmit/receive elements 122. The WTRU 102 may employ MIMO technology. The WTRU 102 may include two or more transmit/receive elements 122 (*e.g.,* multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (*e.g.,* a liquid crystal display (LCD) display unit or organic light-emitting diode (OLED) display unit). The processor 118 may also output user data to the speaker/microphone 124, the keypad 126, and/or the display/touchpad 128. The processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. The processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (*e.g.,* nickel-cadmium (NiCd), nickel-zinc (NiZn), nickel metal hydride (NiMH), lithium-ion (Li-ion), *etc.*), solar cells, fuel cells, and the like.

The processor 118 may also be coupled to the GPS chipset 136, which may be configured to provide location information (*e.g.,* longitude and latitude) regarding the current location of the WTRU 102. In addition to, or in lieu of, the information from the GPS chipset 136, the WTRU 102 may receive location information over the air interface 115/116/117 from a base station (*e.g.,* base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. The peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

FIG. 13C depicts a system diagram of the RAN 103 and the core network 106. As noted above, the RAN 103 may employ a UTRA radio technology to communicate with the WTRUs 102a, 102b, and/or 102c over the air interface 115. The RAN 103 may also be in communication with the core network 106. As shown in FIG. 13C, the RAN 103 may include Node-Bs 140a, 140b, and/or 140c, which may each include one or more transceivers for communicating with the WTRUs 102a, 102b, and/or 102c over the air interface 115. The Node-Bs 140a, 140b, and/or 140c may each be associated with a particular cell (not shown) within the RAN 103. The RAN 103 may also include RNCs 142a and/or 142b. It will be appreciated that the RAN 103 may include any number of Node-Bs and RNCs while remaining consistent with an embodiment.

As shown in FIG. 13C, the Node-Bs 140a and/or 140b may be in communication with the RNC 142a. The Node-B 140c may be in communication with the RNC142b. The Node-Bs 140a, 140b, and/or 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, and/or 140c to which it is connected. Each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 13C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, and/or 102c with access to circuit-switched networks, such as the PSTN 108, to facilitate communications between the WTRUs 102a, 102b, and/or 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, and/or 102c with access to packet-switched networks, such as the Internet 110, to facilitate communications between and the WTRUs 102a, 102b, and/or 102c and IP-enabled devices.

As noted above, the core network 106 may also be connected to the networks 112, which may include other wired or wireless networks that are owned and/or operated by other service providers.

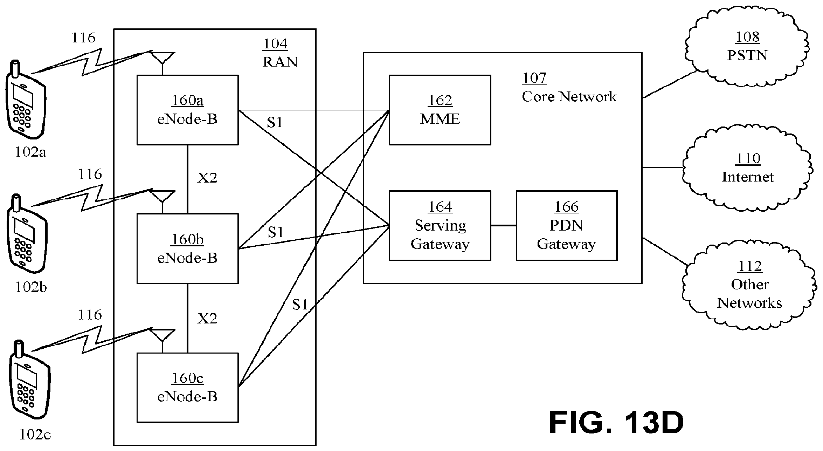

FIG. 13D depicts a system diagram of the RAN 104 and the core network 107. As noted above, the RAN 104 may employ an E-UTRA radio technology to communicate with the WTRUs 102a, 102b, and/or 102c over the air interface 116. The RAN 104 may also be in communication with the core network 107.

The RAN 104 may include eNode-Bs 160a, 160b, and/or 160c, though it will be appreciated that the RAN 104 may include any number of eNode-Bs while remaining consistent with an embodiment. The eNode-Bs 160a, 160b, and/or 160c may each include one or more transceivers for communicating with the WTRUs 102a, 102b, and/or 102c over the air interface 116. The eNode-Bs 160a, 160b, and/or 160c may implement MIMO technology. Thus, the eNode-B 160a, for example, may use multiple antennas to transmit wireless signals to, and receive wireless signals from, the WTRU 102a.

Each of the eNode-Bs 160a, 160b, and/or 160c may be associated with a particular cell (not shown) and may be configured to handle radio resource management decisions, handover decisions, scheduling of users in the uplink and/or downlink, and the like. As shown in FIG. 13D, the eNode-Bs 160a, 160b, and/or 160c may communicate with one another over an X2 interface.

The core network 107 shown in FIG. 13D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, and/or 160c in the RAN 104 via an S1 interface and may serve as a control node. For example, the MME 162 may be responsible for authenticating users of the WTRUs 102a, 102b, and/or 102c, bearer activation/deactivation, selecting a particular serving gateway during an initial attach of the WTRUs 102a, 102b, and/or 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and/or 160c in the RAN 104 via the S1 interface. The serving gateway 164 may generally route and forward user data packets to/from the WTRUs 102a, 102b, and/or 102c. The serving gateway 164 may also perform other functions, such as anchoring user planes during inter-eNode B handovers, triggering paging when downlink data is available for the WTRUs 102a, 102b, and/or 102c, managing and storing contexts of the WTRUs 102a, 102b, and/or 102c, and the like.

The serving gateway 164 may also be connected to the PDN gateway 166, which may provide the WTRUs 102a, 102b, and/or 102c with access to packet-switched networks, such as the Internet 110, to facilitate communications between the WTRUs 102a, 102b, and/or 102c and IP-enabled devices.

The core network 107 may facilitate communications with other networks. For example, the core network 107 may provide the WTRUs 102a, 102b, and/or 102c with access to circuit-switched networks, such as the PSTN 108, to facilitate communications between the WTRUs 102a, 102b, and/or 102c and traditional land-line communications devices. For example, the core network 107 may include, or may communicate with, an IP gateway (e.g., an IP multimedia subsystem (IMS) server) that serves as an interface between the core network 107 and the PSTN 108. The core network 107 may provide the WTRUs 102a, 102b, and/or 102c with access to the networks 112, which may include other wired or wireless networks that are owned and/or operated by other service providers.

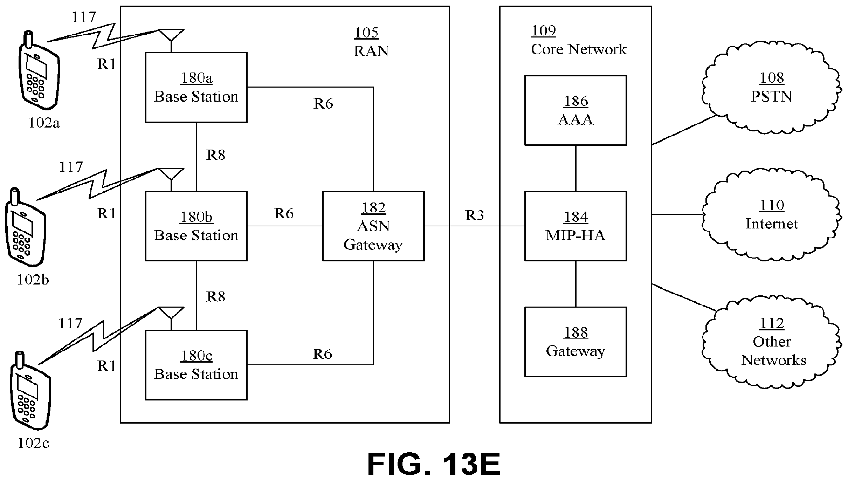

FIG. 13E depicts a system diagram of the RAN 105 and the core network 109. The RAN 105 may be an access service network (ASN) that employs IEEE 802.16 radio technology to communicate with the WTRUs 102a, 102b, and/or 102c over the air interface 117. As will be further discussed below, the communication links between the different functional entities of the WTRUs 102a, 102b, and/or 102c, the RAN 105, and the core network 109 may be defined as reference points.

As shown in FIG. 13E, the RAN 105 may include base stations 180a, 180b, and/or 180c, and an ASN gateway 182, though it will be appreciated that the RAN 105 may include any number of base stations and ASN gateways while remaining consistent with an embodiment.

The base stations 180a, 180b, and/or 180c may each be associated with a particular cell (not shown) in the RAN 105 and may each include one or more transceivers for communicating with the WTRUs 102a, 102b, and/or 102c over the air interface 117. The base stations 180a, 180b, and/or 180c may implement MIMO technology. Thus, the base station 180a, for example, may use multiple antennas to transmit wireless signals to, and receive wireless signals from, the WTRU 102a. The base stations 180a, 180b, and/or 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, and/or 102c and the RAN 105 may be defined as an R1 reference point that implements the IEEE 802.16 specification. Each of the WTRUs 102a, 102b, and/or 102c may establish a logical interface (not shown) with the core network 109. The logical interface between the WTRUs 102a, 102b, and/or 102c and the core network 109 may be defined as an R2 reference point, which may be used for authentication, authorization, IP host configuration management, and/or mobility management.

The communication link between each of the base stations 180a, 180b, and/or 180c may be defined as an R8 reference point that includes protocols for facilitating WTRU handovers and the transfer of data between base stations. The communication link between the base stations 180a, 180b, and/or 180c and the ASN gateway 182 may be defined as an R6 reference point. The R6 reference point may include protocols for facilitating mobility management based on mobility events associated with each of the WTRUs 102a, 102b, and/or 102c.

As shown in FIG. 13E, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, and/or 102c to roam between different ASNs and/or different core networks. The MIP-HA 184 may provide the WTRUs 102a, 102b, and/or 102c with access to packet-switched networks, such as the Internet 110, to facilitate communications between the WTRUs 102a, 102b, and/or 102c and IP-enabled devices. The AAA server 186 may be responsible for user authentication and for supporting user services. The gateway 188 may facilitate interworking with other networks. For example, the gateway 188 may provide the WTRUs 102a, 102b, and/or 102c with access to circuit-switched networks, such as the PSTN 108, to facilitate communications between the WTRUs 102a, 102b, and/or 102c and traditional landline communications devices. The gateway 188 may provide the WTRUs 102a, 102b, and/or 102c with access to the networks 112, which may include other wired or wireless networks that are owned and/or operated by other service providers.

Although not shown in FIG. 13E, it should, may, and/or will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, and/or 102c between the RAN 105 and the other ASNs. The communication link between the core network 109 and the other core networks may be defined as an R5 reference, which may include protocols for facilitating interworking between home core networks and visited core networks.

Although the terms device, M2M, unit, IoT, UE, and/or WTRU may be used herein, it may and should be understood that the use of such terms may be used interchangeably and, as such, may not be distinguishable.

Although features and elements are described above in particular combinations, one of ordinary skill in the art will appreciate that each feature or element can be used alone or in any combination with the other features and elements. The methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. An Internet of Things (IoT) device comprising:

a memory; and
a processor, wherein the processor is configured to:

receive a pre-shared key unique to the IoT device;
receive a first session group key from a device associated with a same local network as the IoT device that was generated based on a group master key and a first sequence number, the first session group key being valid for a time interval; and
send an encrypted message to a device management server (DMS) to establish a secure channel with the DMS, the encrypted message comprising an identifier comprising an indication of the first sequence number, the encrypted message being encrypted based on the first session group key and the pre-shared key.

2. The IoT device of claim 1, wherein the processor is configured to:

concatenate the first session group key and the pre-shared key; and
encrypt the encrypted message as based on the concatenated keys.

3. The IoT device of claim 1, wherein the processor is configured to:

determine a combined key based on cryptographic processing involving the first session group key and the pre-shared key; and
encrypt the encrypted message based on the combined key.

4. The IoT device of claim 3, wherein the cryptographic processing comprises a pseudorandom function (PRF).

5. The IoT device of claim 1, wherein the first session group key is valid if the first sequence number is within a range of sequence numbers and the session group key is invalid if the first sequence number is not within the range of sequence numbers.

6. The IoT device of claim 1, wherein the group master key is associated with a maximum number of session group keys.

7. The IoT device of claim 6, wherein the first session group key was generated based on the group master key for a specified range of sequence numbers.

8. The IoT device of claim 1, wherein the first sequence number is associated with a time interval during which the first session group key associated with the first sequence number is valid.

9. The IoT device of claim 1, wherein the processor is configured to receive a second session group key via the same local network, and wherein the second session group key is associated with a second sequence number.

10. The IoT device of claim 1, wherein the processor is further configured to receive, from the same local network, the first sequence number or an indication of the first sequence number.

11. A device comprising:

a memory; and
a processor configured to:

receive a group master key;
generate a first session group key based on the group master key and a sequence number, the first session group key being valid for a first time period;
send the first session group key to an Internet of Things (IoT) device via a local network;
update the sequence number;
generate a second session group key based on the group master key and the updated sequence number, the second session group key being valid for a second time period; and
send the second session group key to the IoT device via the local network.

12. The device of claim 11, wherein the processor is further configured to send an indication of the sequence number to the IoT device.

13. The device of claim 11, wherein the processor is further configured to:
on a condition that a maximum number of session group keys that can be generated based on the group master key is not exceeded, update the sequence number and generate the second session group key based on the group master key and the updated sequence number.

14. A method of using an Internet of Things (IoT) device, comprising:

receiving a pre-shared key unique to the IoT device;
receiving a first session group key from a device associated with a same local network as the IoT device that was generated based on a group master key and a first sequence number, the first session group key being valid for a time interval; and
sending an encrypted message to a device management server (DMS) to establish a secure channel with the DMS, the encrypted message comprising an identifier comprising an indication of the first sequence number, the encrypted message being encrypted based on the first session group key and the pre-shared key.

15. The method of claim 14, further comprising concatenating the first session group key and the pre-shared key; and encrypting the encrypted message based on the concatenated keys.

**Patentansprüche**

1. Internet der Dinge (IoT) Vorrichtung, umfassend:

einen Speicher; und
einen Prozessor, wobei der Prozessor konfiguriert ist:

einen für die IoT-Vorrichtung eindeutigen, vorher gemeinsam benutzten Schlüssel zu empfangen;
einen ersten Sitzungsgruppenschlüssel von einer Vorrichtung, die mit dem gleichen lokalen Netzwerk wie die IoT-Vorrichtung verbunden ist, zu empfangen, welcher basierend auf einen Gruppenhauptschlüssel und einer ersten Sequenznummer erzeugt wurde, wobei der erste Sitzungsgruppenschlüssel für ein Zeitintervall gültig ist; und
eine verschlüsselte Nachricht an einen Vorrichtungsverwaltungsserver (DMS) zu senden, um einen sicheren Kanal mit dem DMS einzurichten, wobei die verschlüsselte Nachricht einen Identifikator umfasst, der eine Angabe über die erste Sequenznummer umfasst, wobei die verschlüsselte Nachricht basierend auf den ersten Sitzungsgruppenschlüssel und den vorher gemeinsam benutzten Schlüssel verschlüsselt ist.

2. IoT-Vorrichtung nach Anspruch 1, bei welcher der Prozessor konfiguriert ist:

den ersten Sitzungsgruppenschlüssel und den vorher gemeinsam benutzten Schlüssel zu verketteten; und
die verschlüsselte Nachricht basierend auf den verketteten Schlüsseln zu verschlüsseln.

3. IoT-Vorrichtung nach Anspruch 1, wobei der Prozessor konfiguriert ist:

einen kombinierten Schlüssel basierend auf kryptographischer Verarbeitung zu bestimmen, die den ersten Sitzungsgruppenschlüssel und den vorher gemeinsam benutzten Schlüssel einschließt; und
die verschlüsselte Nachricht basierend auf den kombinierten Schlüssel zu verschlüsseln.

4.  IoT-Vorrichtung nach Anspruch 3, wobei die kryptographische Verarbeitung eine Pseudozufallsfunktion (PRF) umfasst.

5.  IoT-Vorrichtung nach Anspruch 1, wobei der erste Sitzungsgruppenschlüssel gültig ist, wenn die erste Sequenznummer innerhalb eines Bereichs von Sequenznummern liegt, und der Sitzungsgruppenschlüssel ungültig ist, wenn die erste Sequenznummer nicht innerhalb des Bereichs von Sequenznummern liegt.

6.  IoT-Vorrichtung nach Anspruch 1, wobei der Gruppenhauptschlüssel mit einer maximalen Anzahl von Sitzungsgruppenschlüsseln verknüpft ist.

7.  IoT-Vorrichtung nach Anspruch 6, wobei der erste Sitzungsgruppenschlüssel basierend auf den Gruppenhauptschlüssel für einen bestimmten Bereich von Sequenznummern erzeugt wurde.

8.  IoT-Vorrichtung nach Anspruch 1, wobei die erste Sequenznummer mit einem Zeitintervall verknüpft ist, innerhalb dessen der erste Sitzungsgruppenschlüssel, der mit der ersten Sequenznummer verknüpft ist, gültig ist.

9.  IoT-Vorrichtung nach Anspruch 1, wobei der Prozessor konfiguriert ist, einen zweiten Sitzungsgruppenschlüssel über das gleiche lokale Netzwerk zu empfangen, und wobei der zweite Sitzungsgruppenschlüssel mit einer zweiten Sequenznummer verknüpft ist.

10. IoT-Vorrichtung nach Anspruch 1, wobei der Prozessor ferner konfiguriert ist, von dem gleichen lokalen Netzwerk die erste Sequenznummer oder eine Angabe über die erste Sequenznummer zu empfangen.

11. Vorrichtung, umfassend:

    einen Speicher; und
    einen Prozessor, der konfiguriert ist:

      einen Gruppenhauptschlüssel zu empfangen;
      einen ersten Sitzungsgruppenschlüssel basierend auf den Gruppenhauptschlüssel und einer Sequenznummer zu erzeugen, wobei der erste Sitzungsgruppenschlüssel für ein erstes Zeitintervall gültig ist;
den ersten Sitzungsgruppenschlüssel über ein lokales Netzwerk an eine Vorrichtung für das Internet der Dinge (IoT) zu senden;
die Sequenznummer zu aktualisieren;
einen zweiten Sitzungsgruppenschlüssel basierend auf den Gruppenhauptschlüssel und der aktualisierten Sequenznummer zu erzeugen, wobei der zweite Sitzungsgruppenschlüssel für ein zweites Zeitintervall gültig ist; und
den zweiten Sitzungsgruppenschlüssel über das lokale Netzwerk an die IoT-Vorrichtung zu senden.

12. Vorrichtung nach Anspruch 11, wobei der Prozessor ferner konfiguriert ist, eine Angabe über die Sequenznummer an die IoT-Vorrichtung zu senden.

13. Vorrichtung nach Anspruch 11, wobei der Prozessor ferner konfiguriert ist:
    unter der Bedingung, dass eine maximale Anzahl von Sitzungsgruppenschlüsseln, die basierend auf den Gruppenhauptschlüssel erzeugt werden können, nicht überschritten ist, Aktualisieren der Sequenznummer, und Erzeugen des zweiten Sitzungsgruppenschlüssels basierend auf den Gruppenhauptschlüssel und der aktualisierten Sequenznummer.

14. Verfahren zur Verwendung einer Vorrichtung für das Internet der Dinge (IoT), umfassend:

    Empfangen eines vorher gemeinsam benutzten Schlüssels, der für die IoT-Vorrichtung eindeutig ist;
    Empfangen eines ersten Sitzungsgruppenschlüssels von einer Vorrichtung, die mit einem gleichen lokalen Netzwerk wie die IoT-Vorrichtung verbunden ist, der basierend auf einen Gruppenhauptschlüssel und einer ersten Sequenznummer erzeugt wurde, wobei der erste Sitzungsgruppenschlüssel für ein Zeitintervall gültig ist; und
    Senden einer verschlüsselten Nachricht an einen Vorrichtungsverwaltungsserver (DMS), um einen sicheren Kanal mit dem DMS einzurichten, wobei die verschlüsselte Nachricht einen Identifikator umfasst, der eine Angabe über die erste Sequenznummer umfasst, wobei die verschlüsselte Nachricht basierend auf den ersten Sitzungsgruppenschlüssel und den vorher gemeinsam benutzten Schlüssel verschlüsselt ist.

15. Verfahren nach Anspruch 14, ferner umfassend ein Verketten des ersten Sitzungsgruppenschlüssels und des zuvor gemeinsam benutzten Schlüssels;

und Verschlüsseln der verschlüsselten Nachricht basierend auf den verknüpften Schlüsseln.

## Revendications

1. Dispositif de l'Internet des objets (IdO) comprenant :

    une mémoire ; et
    un processeur, dans lequel le processeur est configuré pour :

        recevoir une clé pré-partagée unique pour le dispositif IdO ;
        recevoir une première clé de groupe de session d'un dispositif associé à un même réseau local que le dispositif IdO, qui a été générée sur la base d'une clé maîtresse de groupe et d'un premier numéro de séquence, la première clé de groupe de session étant valide pour un intervalle de temps ; et
        envoyer un message crypté à un serveur de gestion de dispositifs (DMS) pour établir un canal sécurisé avec le DMS, le message crypté comprenant un identifiant comprenant une indication du premier numéro de séquence, le message crypté étant crypté sur la base de la première clé de groupe de session et de la clé pré-partagée.

2. Dispositif IdO selon la revendication 1, dans lequel le processeur est configuré pour :

        concaténer la première clé de groupe de session et la clé pré-partagée ; et
        crypter le message crypté sur la base des clés concaténées.

3. Dispositif IdO selon la revendication 1, dans lequel le processeur est configuré pour :

        déterminer une clé combinée sur la base d'un traitement cryptographique impliquant la première clé de groupe de session et la clé pré-partagée ; et
        crypter le message crypté sur la base de la clé combinée.

4. Dispositif IdO selon la revendication 3, dans lequel le traitement cryptographique comprend une fonction pseudo-aléatoire (PRF).

5. Dispositif IdO selon la revendication 1, dans lequel la première clé de groupe de session est valide si le premier numéro de séquence se trouve dans une plage de numéros de séquence et la clé de groupe de session est invalide si le premier numéro de séquence ne se trouve pas dans la plage de numéros de séquence.

6. Dispositif IdO selon la revendication 1, dans lequel la clé maîtresse de groupe est associée à un nombre maximal de clés de groupe de session.

7. Dispositif IdO selon la revendication 6, dans lequel la première clé de groupe de session a été générée sur la base de la clé maîtresse de groupe pour une plage spécifiée de numéros de séquence.

8. Dispositif IdO selon la revendication 1, dans lequel le premier numéro de séquence est associé à un intervalle de temps pendant lequel la première clé de groupe de session associée au premier numéro de séquence est valide.

9. Dispositif IdO selon la revendication 1, dans lequel le processeur est configuré pour recevoir une deuxième clé de groupe de session via le même réseau local, et dans lequel la deuxième clé de groupe de session est associée à un deuxième numéro de séquence.

10. Dispositif IdO selon la revendication 1, dans lequel le processeur est en outre configuré pour recevoir, du même réseau local, le premier numéro de séquence ou une indication du premier numéro de séquence.

11. Dispositif comprenant :

    une mémoire ; et
    un processeur configuré pour :

        recevoir une clé maîtresse de groupe ;
        générer une première clé de groupe de session sur la base de la clé maîtresse de groupe et d'un numéro de séquence, la première clé de groupe de session étant valide pour une première période de temps ;
        envoyer la première clé de groupe de session à un dispositif de l'Internet des objets (IdO) via un réseau local ;
        mettre à jour le numéro de séquence ;
        générer une deuxième clé de groupe de session sur la base de la clé maîtresse de groupe et du numéro de séquence mis à jour, la deuxième clé de groupe de session étant valide pour une deuxième période de temps ; et
        envoyer la deuxième clé de groupe de session au dispositif IdO via le réseau local.

12. Dispositif selon la revendication 11, dans lequel le processeur est en outre configuré pour envoyer une indication du numéro de séquence au dispositif IdO.

**13.** Dispositif selon la revendication 11, dans lequel le processeur est en outre configuré pour :
à condition qu'un nombre maximal de clés de groupe de session qui peuvent être générées sur la base de la clé maîtresse de groupe ne soit pas dépassé, mettre à jour le numéro de séquence et générer la deuxième clé de groupe de session sur la base de la clé maîtresse de groupe et du numéro de séquence mis à jour.

**14.** Procédé d'utilisation d'un dispositif de l'Internet des objets (IdO), consistant à :

recevoir une clé pré-partagée unique pour le dispositif IdO ;
recevoir une première clé de groupe de session d'un dispositif associé à un même réseau local que le dispositif IdO, qui a été générée sur la base d'une clé maîtresse de groupe et d'un premier numéro de séquence, la première clé de groupe de session étant valide pour un intervalle de temps ; et
envoyer un message crypté à un serveur de gestion de dispositifs (DMS) pour établir un canal sécurisé avec le DMS, le message crypté comprenant un identifiant comprenant une indication du premier numéro de séquence, le message crypté étant crypté sur la base de la première clé de groupe de session et de la clé pré-partagée.

**15.** Procédé selon la revendication 14, consistant en outre à concaténer la première clé de groupe de session et la clé pré-partagée ; et à crypter le message crypté sur la base des clés concaténées.

FIG. 1

Response invalid? → lock computer

# FIG. 2

EP 3 286 871 B1

**FIG. 3**

200

202b

202a

216

202c

$KS_{Gseq}$

$KS_{Gseq}$

$K_G$

LAN/WLAN
204/206

$KS_{Gseq}$

202d

202e

202f

**FIG. 4A**

FIG. 4B

**FIG. 5**

FIG. 6

FIG. 7

FIG. 8

900

Set t = t0  902

Set l=0  904

Calculate new group session key, $KS_{Gl} = PRF\{K_G, l\}$  906

Using a suitable local broadcast mechanism, $KS_{Gl}$ and l in the LAN  908

l = max?  910

yes

Group key update procedure  912

no

t + tc < t0?  914

yes

no

l = l + 1; t = t0  916

**FIG. 9**

_1000_

1002

Set l1 = 0 and
l = -1

1004

Listen for
broadcast of
$KS_{Gl}$, l

1006

l = -1?    yes

no

1008

l1 ≠ l?    yes    1010

no

1012

l1 = l;
KG = $KS_{Gl}$

Establish a new secure session with
DMS using {$ID_{Ul}$,$ID_G$,l} as ID and
$K_l \parallel$ KG as key

# FIG. 10

1100

1102 — Set $I_{low} = -w/2$; $I_{high} = w/2$

1104 — Set t= t1

1106 — Secure channel request from $U_i$?

— yes →

1108 — $I_{low} \leq I \leq I_{high}$?

1110 — Deny request

— no →

no

1112 — Use received ID to look up the correct group key KG and to calculate the session group key KSGL $= PRF\{KG, I\}$

1114 — Use received ID to look up the correct individual key $K_i$

1116 — Establish a new secure session with $U_i$ using the shared secret $K_i \mid\mid KS_{GL}$ as key

1118 — t + tc < tl?

— yes → Set t = tl; set $I_{low} = I_{low} + 1$, $I_{high} = I_{high} + 1$

no

1120 — Ilow ≥ max?

— yes → No more channel requests accepted until group key update

no

**FIG. 11**

FIG. 12

100

115/116/117

<u>103/104/105</u>
RAN

115/116/117

<u>108</u>
PSTN

102a

115/116/
117

<u>106/107/109</u>
Core Network

102b

<u>112</u>
Other
Networks

114a

115/116/117

102c

115/116/
117

<u>110</u>
Internet

102d

114b

**FIG. 13A**

**FIG. 13B**

FIG. 13C

FIG. 13D

**FIG. 13E**

**EP 3 286 871 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62152364 B
- US 2015012744 A1